(19) Europäisches Patentamt / European Patent Office / Office européen des brevets

(11) **EP 4 576 014 A1**

(12) **DEMANDE DE BREVET EUROPEEN**

(43) Date de publication:
**25.06.2025 Bulletin 2025/26**

(21) Numéro de dépôt: **24203591.3**

(22) Date de dépôt: **30.09.2024**

(51) Classification Internationale des Brevets (IPC):
**G06V 10/82** (2022.01)   **G06V 40/16** (2022.01)
**G06V 40/40** (2022.01)   **G06V 10/143** (2022.01)

(52) Classification Coopérative des Brevets (CPC):
**G06V 40/40; G06V 10/143; G06V 10/82; G06V 40/172**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **20.12.2023 FR 2314615**

(71) Demandeur: **IDEMIA Public Security France 92400 Courbevoie (FR)**

(72) Inventeurs:
- **BEAUDET, Jean**
  **92400 Courbevoie (FR)**
- **JEZEQUEL, Loïc**
  **92400 Courbevoie (FR)**

(74) Mandataire: **IPS**
**2, place Samuel de Champlain**
**92400 Courbevoie (FR)**

(54) **PROCÉDÉ ET DISPOSITIF DE DÉTERMINATION DE FRAUDES DANS UN SYSTÈME DE RECONNAISSANCE D'IMAGES BIOMÉTRIQUES**

(57)    Procédé et dispositif de détermination de fraudes dans un système de reconnaissance d'images biométriques.

La présente invention concerne un procédé de détermination de fraude dans un système de reconnaissance biométrique caractérisé en ce qu'il comporte les étapes suivantes : obtention d'une première image d'une zone d'intérêt d'un sujet dans une première bande de longueur d'onde ; obtention d'une seconde image de la zone d'intérêt du sujet dans une seconde bande de longueur d'onde ; encodage par un premier encodeur neuronal de la première image pour obtenir une première représentation vectorielle de la première image ; encodage par un second encodeur neuronal de la second image pour obtenir une seconde représentation vectorielle de la seconde image ; calcul d'une mesure de similarité entre la première représentation vectorielle et la seconde représentation vectorielle ; et détermination d'une fraude si la mesure de similarité est inférieure à un seuil prédéfini.

[Fig. 2]

Fig. 2

EP 4 576 014 A1

**Description**

L'invention concerne un procédé de détermination de fraudes dans un système de reconnaissance d'images biométriques basé sur l'analyse d'au moins deux images d'un même objet, par exemple un visage, obtenues dans au moins deux bandes de longueurs d'onde distinctes.

De nombreux systèmes de reconnaissance biométriques d'une personne sont basés sur l'analyse d'images de la personne. Généralement, une partie particulière de la personne, la zone d'intérêt, est utilisée pour la reconnaissance. Il peut s'agir du visage, mais aussi de l'empreinte digitale ou de l'iris de la personne, cette liste étant non limitative.

Les systèmes basés sur l'analyse d'une seule image, typiquement dans le spectre visible, de la zone d'intérêt permettent un taux de reconnaissance raisonnable, quoique perfectible. De tels systèmes se révèlent par contre sensibles aux fraudes. Ils peuvent être dupés par des images construites dans ce but et présentées en lieu et place de la zone d'intérêt de la personne proprement dite.

Une façon de rendre ces systèmes plus robustes consiste à baser la reconnaissance sur un couple d'images de la zone d'intérêt obtenues dans des bandes de longueur d'onde différentes, par exemple une première image est obtenue dans le spectre visible et une seconde image est obtenue dans le spectre infrarouge. Ceci est un exemple, d'autres bandes de longueur d'onde pouvant être envisagées. Les deux images sont alors soumises à un détecteur de fraude, séparément ou concaténées. Ces systèmes permettent d'améliorer la détection de fraudes. Par exemple, une image de visage présentée à la place du visage réel de la personne, sur une photographie ou un écran, peut produire une image réaliste du visage dans le visible mais une image noire dans le spectre infrarouge.

Dans ces systèmes, le détecteur de fraudes est typiquement un classifieur utilisant la technologie des réseaux de neurones entraîner à reconnaitre les tentatives de fraude. Un premier classifieur peut être spécialisé sur le spectre visible alors qu'un second classifieur peut être spécialisé sur le spectre infrarouge. Dans ce cas, le résultat des deux classifieurs est alors consolidé pour obtenir le résultat final de la détection de fraude. En alternative, les deux images sont concaténées. Par exemple, l'image infrarouge est ajoutée comme composante supplémentaire aux composantes rouge, vert et bleu de l'image visible. Alternativement, l'image infrarouge vient remplacer l'une des composantes pour obtenir, par exemple, une image RGIR, c'est-à-dire rouge, vert et infrarouge. C'est alors cette image combinant les deux bandes de longueur d'onde différentes qui est fournie en entrée d'un unique classifieur pour détecter les fraudes.

Ces systèmes offrent une meilleure détection des fraudes, mais souffrent encore d'insuffisance. Notamment, ces classifieurs sont entraînés sur des poses de visage, des expressions données et pour des techniques de fraude connues. Face à une nouvelle pose, expression ou technologie de fraude, leur résultat est imprévisible.

L'invention présentée vise à résoudre ce problème.

**Exposé de l'invention**

**A** cet effet, l'invention propose de soumettre les images d'entrée à un encodage. Chaque image est encodée à l'aide d'un encodeur basé sur un réseau de neurone. Le résultat de l'encodage est un vecteur de données représentatives de l'image. La fraude est alors détectée par un calcul de similarité entre les représentations encodées des images dans chaque bande de longueur d'onde. Les encodeurs sont entrainés de manière conjointes pour maximiser la similarité des représentations encodées des images provenant d'une même personne et minimiser la similarité lorsque ce n'est pas le cas.

Cette manière de faire permet d'obtenir de meilleurs résultats de détection de la fraude par rapport aux systèmes connus à base de classifieurs. En particulier, face à une nouvelle technologie de fraude n'ayant pas été prise en compte lors de l'apprentissage, le risque que les images frauduleuses produisent des représentations similaires est faible. En outre, l'invention améliore la robustesse aux conditions de prises de vue.

Il est ainsi proposé un procédé de détermination de fraude dans un système de reconnaissance biométrique caractérisé en ce qu'il comporte les étapes suivantes : :

- obtention d'une première image d'une zone d'intérêt d'un sujet dans une première bande de longueur d'onde ;
- obtention d'une seconde image de la zone d'intérêt du sujet dans une seconde bande de longueur d'onde ;
- encodage par un premier encodeur neuronal de la première image pour obtenir une première représentation vectorielle de la première image ;
- encodage par un second encodeur neuronal de la second image pour obtenir une seconde représentation vectorielle de la seconde image ;
- calcul d'une mesure de similarité entre la première représentation vectorielle et la seconde représentation vectorielle ; et
- détermination d'une fraude si la mesure de similarité est inférieure à un seuil prédéfini.

Selon certains modes de réalisation, la première image et la seconde image sont capturées au même instant.

Selon certains modes de réalisation, la première image et la seconde image sont capturées par une même caméra sur un même capteur.

Selon certains modes de réalisation, la mesure de similarité est un produit scalaire normalisé.

Selon certains modes de réalisation, le premier encodeur neuronal et le second encodeur neuronal sont entraînés conjointement.

Selon certains modes de réalisation, le premier encodeur neuronal et le second encodeur neuronal sont entraînés de façon à maximiser la similarité des première et seconde représentations vectorielles pour des images authentiques et à minimiser la similarité des première et seconde représentations vectorielles pour des images frauduleuses ou ne provenant pas d'une même acquisition.

Selon certains modes de réalisation, la première bande de longueurs d'onde est dans le spectre visible, notamment comprise entre 380 et 780 nm, et la seconde bande de longueur d'onde est dans le spectre infrarouge, notamment comprise entre 800 nm et 960 nm.

Il est également proposé un produit programme informatique comportant des instructions pour la mise en oeuvre du procédé selon l'invention, lorsque ce programme est exécuté par un processeur.

Il est également proposé un support d'enregistrement non transitoire lisible par un ordinateur sur lequel est enregistré un programme pour la mise en oeuvre du procédé selon l'invention lorsque ce programme est exécuté par un processeur.

Il est également proposé un dispositif de détermination de fraude dans un système de reconnaissance biométrique caractérisé en ce qu'il comporte un processeur configuré pour exécuter les étapes suivantes :

- obtention d'une première image d'une zone d'intérêt d'un sujet dans une première bande de longueur d'onde ;
- obtention d'une seconde image de la zone d'intérêt du sujet dans une seconde bande de longueur d'onde ;
- encodage par un premier encodeur neuronal de la première image pour obtenir une première représentation vectorielle de la première image ;
- encodage par un second encodeur neuronal de la second image pour obtenir une seconde représentation vectorielle de la seconde image ;
- calcul d'une mesure de similarité entre la première représentation vectorielle et la seconde représentation vectorielle ;
- détermination d'une fraude si la mesure de similarité est inférieure à un seuil prédéfini.

L'invention permet donc d'être plus robuste aux conditions de prise de vue, telle que l'orientation du visage par rapport à la caméra. En effet, contrairement à un classifieur, la pose, c'est-à-dire l'orientation du visage par rapport à la caméra, non vue à l'apprentissage est une donnée inconnue, qui pourra être mal traitée, alors qu'avec l'invention, la pose étant identique pour les deux vues, elle n'a que peu d'influence sur la similarité entre les deux encodages. De même, l'invention permet d'être plus robuste aux changements d'expression.

Ce programme peut utiliser n'importe quel langage de programmation (par exemple, un langage objet ou autre), et être sous la forme d'un code source interprétable, d'un code partiellement compilé ou d'un code totalement compilé.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, pour exécuter tout ou partie du procédé décrit ci-avant.

**Brève description des dessins**

D'autres caractéristiques, détails et avantages de l'invention apparaîtront à la lecture de la description détaillée ci-après. Celle-ci est purement illustrative et doit être lue en regard des dessins annexés, sur lesquels :

**Fig. 1**

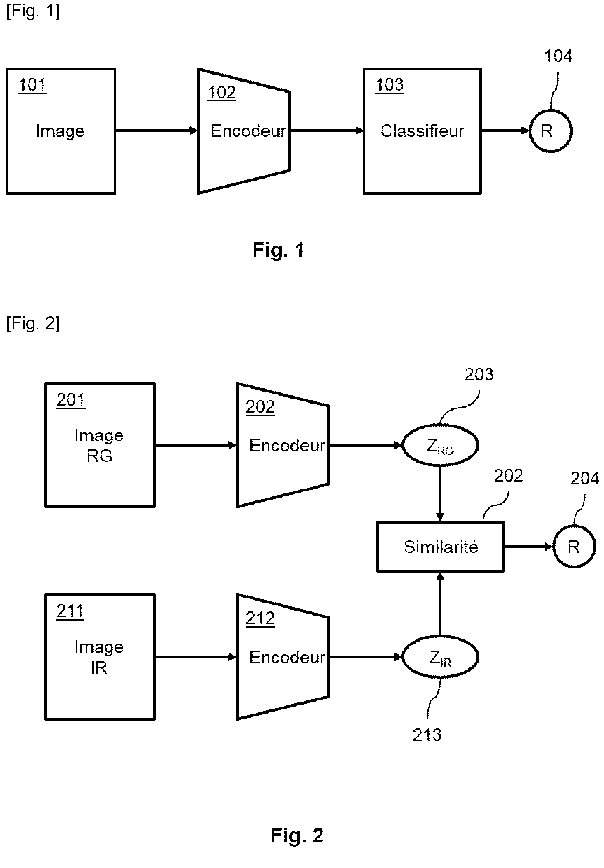

[Fig. 1] illustre un système de détection de fraude selon l'art antérieur ;
**Fig. 2**
[Fig. 2] illustre un système de détection de fraude selon un mode de réalisation de l'invention ;
**Fig. 3**

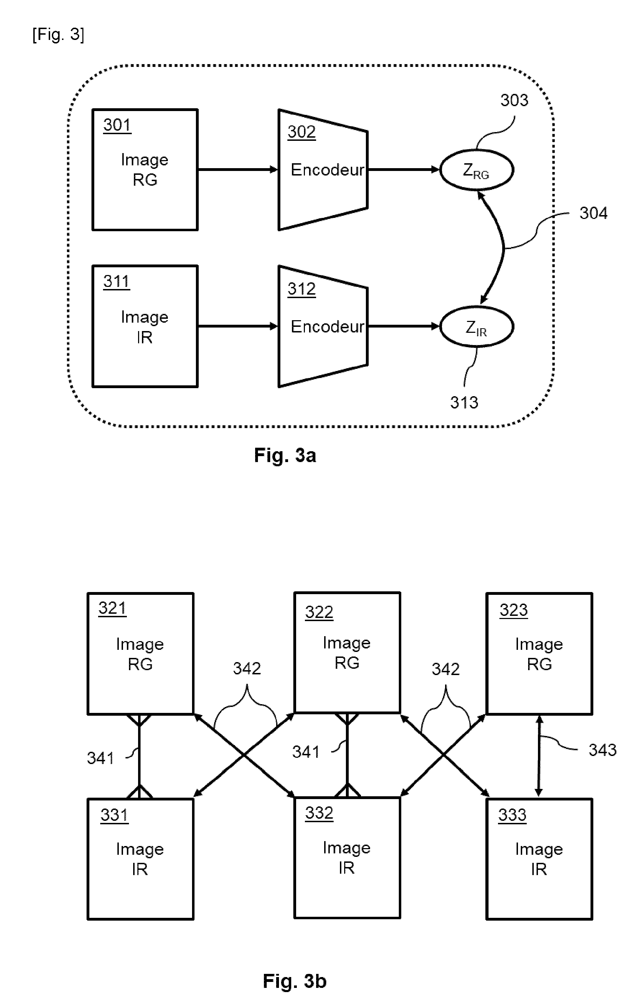

[Fig. 3a] et [Fig. 3b] illustrent l'apprentissage d'un système de détection de fraude selon un premier exemple de réalisation de l'invention ;
**Fig. 4**

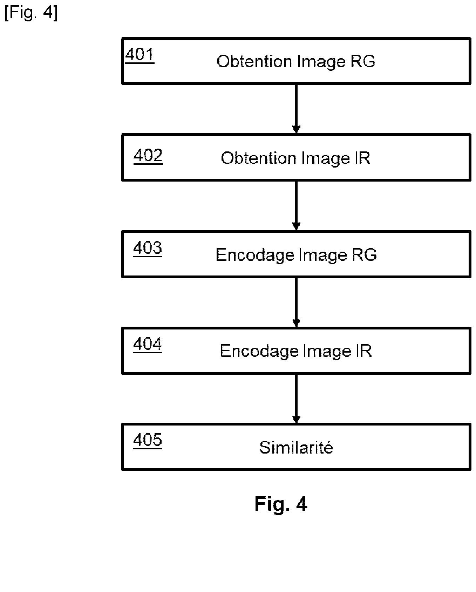

[Fig. 4] illustre les principales étapes d'un procédé de détection de fraude selon un exemple de réalisation de l'invention.
**Fig. 5**

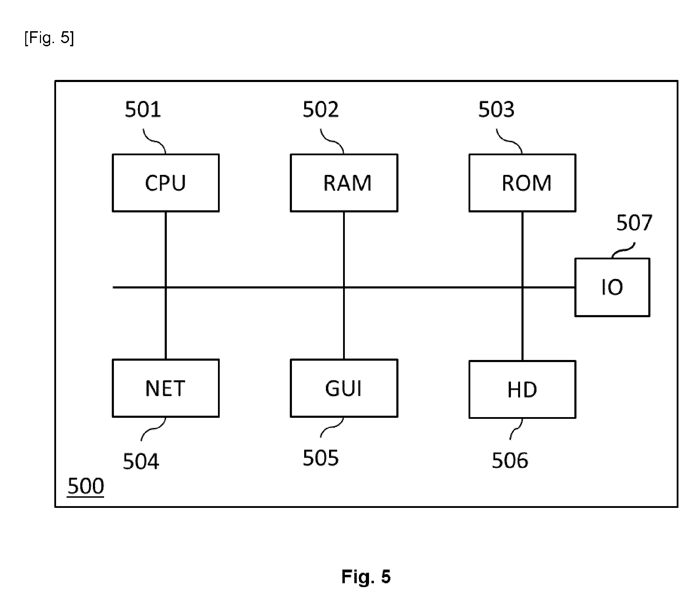

[Fig. 5] illustre un bloc-diagramme schématique d'un dispositif de traitement de l'information pour la mise en oeuvre d'un ou plusieurs modes de réalisation de l'invention.

**Description détaillée**

La figure 1 illustre un système de détection de fraude selon l'art antérieur.

Le système de détection de fraude s'intègre typiquement dans une application plus large destinée à la reconnaissance d'une personne. Cette reconnaissance se base sur une ou plusieurs images d'une zone d'intérêt de la personne à reconnaitre. Cette zone d'intérêt est un visage dans l'exemple de réalisation. Mais l'invention s'applique de manière identique pour d'autres zones d'intérêt comme le bout du doigt pour une reconnaissance d'empreinte digitale, ou encore une image de l'œil de la personne pour une reconnaissance de l'iris.

Les tentatives de fraude visent essentiellement à tenter de tromper le système de reconnaissance. Typiquement, une personne cherche à être identifiée par le système comme une autre personne. Par exemple, une personne présente la photographie d'une personne autorisée pour tenter d'avoir accès à un bâtiment ou à une pièce sous le contrôle du système de reconnaissance. Cette photographie peut être présentée sous la forme d'une image « papier » ou encore affichée sur un écran de tablette par exemple.

D'autres tentatives de fraude consistent simplement à éviter de se faire identifier. Ce peut être le cas de personnes recherchées par les autorités par exemple. Dans ce cas, la tentative de fraude vise à modifier l'apparence de la zone d'intérêt par du grimage, des accessoires comme des lunettes particulières, ou encore des objets mis en bouche pour modifier le contour des joues de l'individu.

Le système de détection de fraude prend en entrée une image 101 de la zone d'intérêt de la personne que l'on cherche à identifier. L'image est typiquement prise par une caméra. Le sujet peut alors être illuminé pour garantir un éclairage correct de la zone d'intérêt.

Les systèmes les plus simples utilisent une simple image 101 prise par une caméra dans le domaine visible, c'est-à-dire dans une bande de longueurs d'onde comprise entre 380 et 780 nm. Une telle image 101 est typiquement une image couleur comprenant trois composantes rouge, vert et bleu. Ce qui signifie que chaque point de l'image est défini par trois valeurs numériques différentes, une valeur de rouge, une valeur de vert et une valeur de bleue. Ces images sont appelées RGB.

Des systèmes plus sophistiqués couplent l'image dans le domaine des longueurs d'onde visibles par une seconde image prise dans une autre bande de longueurs d'onde différente. Par exemple, cette seconde bande de longueurs d'onde peut être la bande ultra-violette, ou encore la bande de longueurs d'onde infrarouge comprise entre 800 nm et 860 nm, ou encore une bande centrée sur 940 nm, par exemple entre 920 nm et 960 nm. L'exemple de réalisation, non limitatif, utilise la bande infrarouge comme seconde bande de longueur d'onde. Le choix de la seconde bande de longueur d'onde est fait en fonction du rendu visuel de la zone d'intérêt dans cette bande, le choix est donc ouvert.

Le choix de l'infrarouge comme seconde bande de longueur d'onde a l'avantage d'être hors du spectre visible. La plupart des tentatives de fraude sont en effet conçues pour tromper le système dans le visible, le choix d'une second bande de longueur d'onde hors du spectre visible permet généralement de les déjouer. L'infrarouge est également proche du visible ce qui facilite la mise au point, en particulier dans le cas d'une caméra unique capturant le spectre visible et l'infrarouge lors d'une même acquisition.

L'image d'entrée 101 peut alors se voir ajouter une quatrième composante correspondant à l'image dans le domaine infrarouge, on parle alors d'une image RGBIR à quatre composantes. Alternativement, l'image infrarouge vient remplacer une des composantes de l'image visible, par exemple le bleu, on parle alors d'image RGIR. L'image d'entrée est alors une image combinée, combinant les deux domaines de longueur d'onde.

Alternativement, les images visible et infrarouge ne sont pas combinées. Le système illustré à la figure 1 est alors dupliqué. Un premier système traite l'image visible et le second traite l'image infrarouge, le résultat des deux systèmes est utilisé pour obtenir le résultat final.

Il est possible d'utiliser deux caméras différentes pour obtenir les images visible et infrarouge. Ces caméras doivent être proches et synchronisées pour minimiser une possible différence de pose entre les deux images.

Avantageusement une seule caméra est utilisée permettant d'obtenir les deux bandes de longueur d'onde sur un capteur unique. Cette solution est celle qui donne les meilleurs résultats car elle garantit la synchronisation et l'unicité de la pose du sujet entre les deux images.

L'image d'entrée 101 est fournie à un encodeur 102 pour obtenir une représentation vectorielle de l'image d'entrée. Cet encodeur est un réseau de neurones, par exemple utilisant l'architecture appelée *EfficientNet* décrite dans l'article : « EfficientNet: Rethinking Model Scaling for Convolutional Neuronal Networks » de Mingxing Tan et Quoc V. Le.

La représentation vectorielle de l'image est alors soumise à un classifieur 103 pour produire un résultat 104. Le classifieur est également un réseau neuronal. Le résultat est binaire et donne la détermination par le système de l'authenticité de l'image d'entrée 101, à savoir si cette image est frauduleuse ou non. Alternativement, le résultat est un nombre réel, par exemple compris entre 0 et 1 qui donne une probabilité de fraude sur l'image d'entrée 101.

Un tel système est entrainé sur un ensemble d'images que l'on sait authentiques (non frauduleuses) et d'images que l'on sait être frauduleuses. Les images frauduleuses utilisées lors de l'entraînement sont générées à partir des techniques de fraudes connues. C'est là l'une des faiblesses de ces systèmes. Face à une nouvelle technique de fraude non envisagée lors de l'entraînement du système, le résultat n'est pas prévisible. Le système selon l'invention améliore alors les performances de tels systèmes et le rend moins sensible aux modifications de pose et d'expression du visage.

La figure 2 illustre un système de détection de fraude selon un mode de réalisation de l'invention.

Ce système prend en entrée deux images 201 et 211 dans deux bandes de longueur d'onde différentes du sujet et plus précisément de la zone d'intérêt du sujet. Avantageusement, ces images sont prises au même instant en minimisant la différence d'angle de vue. Comme expliqué précédemment, les meilleurs résultats sont obtenus avec une caméra unique permettant la prise de vue simultanée des deux bandes de longueur d'onde par un même capteur. De cette façon on garantit la parfaite des prises de vue parfaitement synchrone et exactement le même angle de vue.

Dans l'exemple de réalisation, une caméra unique est utilisée qui produit une image RGIR, c'est-à-dire comprenant trois composantes, une composante rouge, une composante verte et une composante infrarouge.

Chaque image est alors encodée par un encodeur 202, 212, spécialisé pour la bande de longueur d'onde utilisé. L'encodeur 202 est spécialisé pour l'encodage des images RG, tandis que l'encodeur 212 est spécialisé pour les images infrarouge. La spécialisation des encodeurs est obtenue à l'entraînement de ces réseaux de neurones sur des images dans la bande de longueur d'onde donnée.

Le résultat 203, 213 de chaque encodeur est une représentation vectorielle de leur image d'entrée 201, 211 respective.

Au lieu de soumettre les représentations vectorielles des images à un classifieur comme dans l'art antérieur, la décision 204 quant à l'aspect frauduleux des images d'entrée est ici déduite d'une mesure de similarité 202 entre les deux représentations vectorielles 203, 213 associées aux deux images d'entrée dans leurs bandes de longueur d'onde respectives.

Le mesure de similarité entre les représentations vectorielles 203, 213 des images d'entrée est effectuée, par exemple, par un produit scalaire normalisé des vecteurs constituant ces représentations vectorielles. Ce produit scalaire normalisé, correspond à un cosinus entre les directions des vecteurs. Le résultat du produit scalaire est alors comparé à un seuil prédéfini au-dessus duquel la similarité entre les vecteurs est considéré comme déterminant des images authentiques. En dessous du seuil, les images d'entrée sont considérées comme frauduleuses. Dans l'exemple de réalisation, la valeur du seuil est fixée à 0.38.

Toute autre mesure de similarité entre les vecteurs peut être utilisée alternativement au produit scalaire normalisé, par exemple une mesure de la distance euclidienne entre les vecteurs.

Le procédé ainsi mis en place a l'avantage de pouvoir détecter des images frauduleuses qui seraient générées à l'aide de nouvelles techniques de fraude. En effet, il est peu probable que les représentations vectorielles issues de ces nouvelles techniques de fraude soient similaire dans les deux bandes de longueur d'onde analysées.

Le procédé ainsi décrit peut être généralisé à plus de deux bandes de longueur d'onde en générant une représentation vectorielle de chaque bande analysée. La mesure de similarité peut alors être faite deux à deux entre les représentations vectorielles obtenues. En variante, la moyenne des représentations vectorielles peut être calculée, puis les produits scalaires entre les vecteurs et cette moyenne calculés. La production du résultat peut alors être faite par comparaison de chaque mesure de similarité au seuil prédéfini, les images étant déterminées comme authentiques si aucune des mesures de similarité n'excède le seuil. Alternativement, une moyenne des mesures de similarité peut être comparée au seuil prédéfini pour obtenir le résultat.

Les figures 3a et 3b illustrent l'apprentissage des encodeurs 202 et 212 utilisés par le système de détermination de fraude illustré par la figure 2.

Le système de la figure 3a reprend les images d'entrée 301 et 311 correspondant aux images d'entrée 201 et 211, les encodeurs 302 et 312 correspondant aux encodeurs 302 et 312, pour générer les représentations vectorielles 303 et 313. Les deux encodeurs 302 et 312 sont entraînés de manière conjointe de façon à minimiser ou maximiser la similarité 304 des représentations vectorielles 303 et 313 en fonction des images d'entrée 301 et 311.

La figure 3b illustre le traitement des images d'entrée lors de l'entraînement du système. Les paires d'images (321, 331), (322, 332) et (323, 333) sont des paires d'images d'entrée utilisées lors de l'apprentissage. Les paires d'images (321, 331) et (322, 332) sont des paires d'images authentiques, tandis que la paire d'image (323, 333) est frauduleuse. L'apprentissage consiste à maximiser la similarité des représentations vectorielles des images 321 et 331 d'une part, ainsi que la similarité des représentations vectorielles des images 322 et 332 d'autre part. Ceci est illustré par les liens 341. A l'inverse, la similarité des représentations vectorielles des images 321 et 332, 322 et 331, 322 et 333, 323 et 332, 323 et 333 est minimisée. Il s'agit donc de maximiser la similarité entre les images d'une même paire d'images authentiques et de minimiser la similarité entre les images appartenant à des paires d'images différentes, représenté par les flèches 342, ainsi qu'entre les deux images d'une même paire frauduleuse, représenté par la flèche 343.

Dans l'exemple de réalisation, ce principe d'apprentissage se traduit par l'utilisation, par exemple, de la fonction de perte suivante :

[Math. 1]

$$\mathcal{L} = \sum_{i \in \{live\}} -\log \exp\left(\frac{sim\left(Z_{IR_i}, Z_{RG_i}\right)}{\tau}\right) + \sum_{i} \log \sum_{j \neq i} \exp\left(\frac{sim\left(Z_{IR_i}, Z_{RG_j}\right)}{\tau}\right)$$

$$+ \lambda_{spoof} \sum_{i \in \{spoof\}} \log \exp\left(\frac{sim\left(Z_{IR_i}, Z_{RG_i}\right)}{\tau}\right)$$

Les indices i et j correspondent aux paires d'images qui peuvent appartenir à l'ensemble des paires d'images authentiques, appelé *live,* ou à l'ensemble des paires d'images frauduleuses, appelé *spoof.* La fonction sim est la fonction de similarité. Les valeurs $Z$ sont les représentations vectorielles indicées par la bande de longueur d'onde et l'indice de la paire d'images. $\tau$ est un paramètre de « température », par exemple de valeur 0,1 dans l'exemple de réalisation, et $\lambda_{spoof}$ est un coefficient réglant l'importance relative des différents termes, par exemple de valeur 0,5 dans l'exemple de réalisation.

Cet apprentissage de type contrastif est réalisé de manière classique en constituant des lots de paires d'images. Dans chaque lot, on constitue des paires d'images authentiques, des paires d'images frauduleuses et des paires d'images croisées, où les images proviennent de différentes acquisitions. La fonction de perte ci-dessus encourage la formation de représentations vectorielles similaires pour les paires d'images authentiques et dissimilaires pour toutes les autres paires.

La figure 4 illustre les principales étapes du procédé de détermination de fraude selon un mode de réalisation de l'invention.

Dans une étape 401, une première image de la zone d'intérêt d'un sujet est obtenue. Cette première image correspond à une première bande de longueur d'onde. Dans l'exemple de réalisation, cette première bande de longueur d'onde est le spectre visible.

Dans une étape 402, une seconde image de la même zone d'intérêt du sujet est obtenue. Cette seconde image correspond à une seconde bande de longueur d'onde. Dans l'exemple de réalisation, cette première bande de longueur d'onde est le spectre infrarouge.

Dans une étape 403, la première image est encodée à l'aide d'un premier encodeur neuronal pour produire une représentation vectorielle de la première image. Ce premier encodeur neuronal est entrainé sur des images correspondant à la première bande de longueur d'onde.

Dans une étape 404, la seconde image est encodée à l'aide d'un second encodeur neuronal pour produire une représentation vectorielle de la seconde image. Ce second encodeur neuronal est entrainé sur des images correspondant à la seconde bande de longueur d'onde.

Dans une étape 405, les représentations vectorielles des deux images sont comparées par une fonction de similarité, par exemple un produit scalaire normalisé. Le résultat de cette fonction de similarité est utilisé pour déterminer si les images d'entrée sont authentiques ou au contraire frauduleuses. Si les représentations vectorielles sont suffisamment similaires, par exemple en comparant le résultat de la fonction de similarité à un seuil, on détermine que les images d'entrée sont authentiques.

La figure 5 illustre un bloc-diagramme schématique d'un dispositif de traitement de l'information 500 pour la mise en oeuvre d'un ou plusieurs modes de réalisation de l'invention. Le dispositif 500 de traitement de l'information peut être un périphérique tel qu'un micro-ordinateur, un poste de travail ou un terminal mobile de télécommunication. Le dispositif 500 comporte un bus de communication connecté à :

- une unité centrale de traitement 501, tel qu'un microprocesseur, notée CPU;

- une mémoire à accès aléatoire 502, notée RAM, pour mémoriser le code exécutable du procédé de réalisation de l'invention ainsi que les registres adaptés à enregistrer des variables et des paramètres nécessaires pour la mise en oeuvre du procédé selon des modes de réalisation de l'invention ; la capacité de mémoire du dispositif peut être complétée par une mémoire RAM optionnelle connectée à un port d'extension, par exemple;

- une mémoire morte 503, notée ROM, pour stocker des programmes informatiques pour la mise en oeuvre des modes de réalisation de l'invention;

- une interface réseau 504 est normalement connectée à un réseau de communication sur lequel des données numériques à traiter sont transmis ou reçus. L'interface réseau 504 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lues à partir de l'interface de réseau pour la réception sous le contrôle de l'application logiciel exécuté dans le processeur 501 ;

- une interface utilisateur 505 pour recevoir des entrées d'un utilisateur ou pour afficher des informations à un utilisateur ;

- un dispositif de stockage 506 tel que décrit dans l'invention et noté HD ;

- un module d'entrée/sortie 507 pour la réception / l'envoi de données depuis / vers des périphériques externes tels que disque dur, support de stockage amovible ou autres.

Le code exécutable peut être stocké dans une mémoire morte 503, sur le dispositif de stockage 506 ou sur un support amovible numérique tel que par exemple un disque. Selon une variante, le code exécutable des programmes peut être reçu au moyen d'un réseau de communication, via l'interface réseau 504, afin d'être stocké dans l'un des moyens de stockage du dispositif de communication 500, tel que le dispositif de stockage 506, avant d'être exécuté.

L'unité centrale de traitement 501 est adaptée pour commander et diriger l'exécution des instructions ou des portions de code logiciel du programme ou des programmes selon l'un des modes de réalisation de l'invention, instructions qui sont stockées dans l'un des moyens de stockage précités. Après la mise sous tension, le CPU 501 est capable d'exécuter des instructions de la mémoire RAM principale 502, relatives à une application logicielle. Un tel logiciel, lorsqu'il est exécuté par le processeur 501, provoque l'exécution des procédés décrits.

Dans ce mode de réalisation, l'appareil 500 est un appareil programmable qui utilise un logiciel pour mettre en oeuvre l'invention. Toutefois, à titre subsidiaire, l'appareil 500 peut être mise en oeuvre, en tout ou en partie, dans le matériel (par exemple, sous la forme d'un circuit intégré spécifique ou ASIC).

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

Bien que décrits à travers un certain nombre d'exemples de réalisation détaillés, le procédé proposé et l'équipement pour la mise en oeuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé de détermination de fraude dans un système de reconnaissance biométrique **caractérisé en ce qu'**il comporte les étapes suivantes :

    - obtention d'une première image d'une zone d'intérêt d'un sujet dans une première bande de longueur d'onde ;
    - obtention d'une seconde image de la zone d'intérêt du sujet dans une seconde bande de longueur d'onde ;
    - encodage par un premier encodeur neuronal de la première image pour obtenir une première représentation vectorielle de la première image ;
    - encodage par un second encodeur neuronal de la second image pour obtenir une seconde représentation vectorielle de la seconde image ;
    - calcul d'une mesure de similarité entre la première représentation vectorielle et la seconde représentation vectorielle ; et
    - détermination d'une fraude si la mesure de similarité est inférieure à un seuil prédéfini.

2. Procédé selon la revendication 1, **caractérisé en ce que** la première image et la seconde image sont capturées au même instant.

3. Procédé selon la revendication 2, **caractérisé en ce que** la première image et la seconde image sont capturées par une même caméra sur un même capteur.

4. Procédé selon l'une des revendications 1 à 3, **caractérisé en ce que** la mesure de similarité est un produit scalaire normalisé.

5. Procédé selon l'une des revendications 1 à 4, **caractérisé en ce que** le premier encodeur neuronal et le second encodeur neuronal sont entraînés conjointement.

6. Procédé selon la revendication 5, **caractérisé en ce que** le premier encodeur neuronal et le second encodeur neuronal sont entraînés de façon à maximiser la similarité des première et seconde représentations vectorielles pour des images authentiques et à minimiser la similarité des première et seconde représentations vectorielles pour des images frauduleuses ou ne provenant pas d'une même acquisition.

7. Procédé selon l'une quelconque des revendications 1 à 5, **caractérisé en ce que** la première bande de longueurs d'onde est dans le spectre visible, notamment comprise entre 380 et 780 nm, et la seconde bande de longueur d'onde est dans le spectre infrarouge, notamment comprise entre 800 nm et 960 nm.

8. Produit programme informatique comportant des instructions pour la mise en oeuvre du procédé selon l'une des revendications 1 à 7, lorsque ce programme est exécuté par un processeur.

9. Support d'enregistrement non transitoire lisible par un ordinateur sur lequel est enregistré un programme pour la mise en oeuvre du procédé selon l'une des revendications 1 à 7 lorsque ce programme est exécuté par un processeur.

10. Dispositif de détermination de fraude dans un système de reconnaissance biométrique **caractérisé en ce qu'**il comporte un processeur configuré pour exécuter les étapes suivantes :

    - obtention d'une première image d'une zone d'intérêt d'un sujet dans une première bande de longueur d'onde ;
    - obtention d'une seconde image de la zone d'intérêt du sujet dans une seconde bande de longueur d'onde ;
    - encodage par un premier encodeur neuronal de la première image pour obtenir une première représentation vectorielle de la première image ;
    - encodage par un second encodeur neuronal de la second image pour obtenir une seconde représentation vectorielle de la seconde image ;
    - calcul d'une mesure de similarité entre la première représentation vectorielle et la seconde représentation vectorielle ;
    - détermination d'une fraude si la mesure de similarité est inférieure à un seuil prédéfini.

[Fig. 1]

**Fig. 1**

[Fig. 2]

**Fig. 2**

[Fig. 3]

**Fig. 3a**

**Fig. 3b**

[Fig. 4]

| 401 | Obtention Image RG |
|---|---|

↓

| 402 | Obtention Image IR |
|---|---|

↓

| 403 | Encodage Image RG |
|---|---|

↓

| 404 | Encodage Image IR |
|---|---|

↓

| 405 | Similarité |
|---|---|

**Fig. 4**

[Fig. 5]

**Fig. 5**

Europäisches
Patentamt

European
Patent Office

Office européen
des brevets

**RAPPORT DE RECHERCHE EUROPEENNE**

Numéro de la demande

EP 24 20 3591

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/039845 A1 (CHEN CHIA YU [US] ET AL) 8 février 2018 (2018-02-08) * alinéa [0012] - alinéa [0053]; figures 1-8 * | 1-10 | INV. G06V10/82 G06V40/16 G06V40/40 G06V10/143 |
| | ----- | | |
| A | US 11 842 573 B1 (RODRIGUEZ RAPHAEL A [US]) 12 décembre 2023 (2023-12-12) * colonne 5, alinéa 35 - colonne 20, ligne 41; figures 1-8 * | 1-10 | |
| | ----- | | |

DOMAINES TECHNIQUES RECHERCHES (IPC)

G06V

Le présent rapport a été établi pour toutes les revendications

| Lieu de la recherche | Date d'achèvement de la recherche | Examinateur |
|---|---|---|
| La Haye | 19 décembre 2024 | Thibault, Guillaume |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 20 3591

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-12-2024

| Document brevet cité au rapport de recherche | Date de publication | Membre(s) de la famille de brevet(s) | Date de publication |
|---|---|---|---|
| US 2018039845    A1 | 08-02-2018 | AUCUN | |
| US 11842573      B1 | 12-12-2023 | AUCUN | |

Pour tout renseignement concernant cette annexe : voir Journal Officiel de l'Office européen des brevets, No.12/82

EPO FORM P0460